Europäisches Patentamt

European Patent Office

Office européen des brevets

(19)

(11) Numéro de publication: **0 141 756**
A2

(12) # DEMANDE DE BREVET EUROPEEN

(21) Numéro de dépôt: **84402249.1**

(22) Date de dépôt: **08.11.84**

(51) Int. Cl.⁴: **A 01 D 90/12,** A 01 F 12/50

(30) Priorité: **08.11.83 FR 8317746**

(43) Date de publication de la demande: **15.05.85**
**Bulletin 85/20**

(84) Etats contractants désignés: **AT BE DE GB NL**

(71) Demandeur: **Société dite: ETS M. LESGOURGUES GAVADOUR CARGILL, F-40300 Peyrehorade (Landes) (FR)**

(72) Inventeur: **Gendreau, Jean-Michel, Medillac par Chalais (Charente) (FR)**

(74) Mandataire: **Cabinet BERT, DE KERAVENANT & HERRBURGER, 115, Boulevard Haussmann, F-75008 Paris (FR)**

(54) **Remorque à fonctions multiples destinée plus particulièrement aux travaux agricoles.**

㊗ a) L'invention concerne un remorque à fonctions multiples destinée plus particulièrement aux travaux agricoles tels que le transport de charges, et la pesée de grains.

b) Remorque caractérisée en ce que la benne de transport (5) supporte un portique (10) sur lequel est accrochée une trémie de réception (20) du grain coopérant avec des organes de pesée (15) du grain contenu dans la trémie (20), ces organes de pesée (15) étant associés à un boîtier électronique (16) comportant un dispositif d'affichage (17) du poids du grain.

c) La présente invention trouve son application principale dans l'industrie des matériels agricoles.

0141756

1

" Remorque à fonctions multiples destinés plus particulièrement aux travaux agricoles ".

La présente invention concerne une remorque à fonctions multiples destinée plus particulièrement
aux travaux agricoles tels que le transport de charges
et la pesée de grains pour déterminer le rendement de
production, cette remorque étant d'un type compact susceptible d'être accrochée à un véhicule tracteur et comportant un châssis pourvu de roues et sur lequel est montée une benne de transport.

Il se pose en agriculture un problème
général de la mesure du rendement. Pour effectuer cette
mesure, il s'agit de peser une quantité de grains et de
mesurer la surface sur laquelle a été récolté ce grain.

La présente invention a donc pour but de
créer une remorque à fonctions multiples permettant de
peser le grain, pour une surface donnée, à la sortie de
la vis de vidange de l'engin de récolte tel qu'une moissonneuse-batteuse. La présente invention a également pour
but de créer une remorque d'un type compact susceptible
d'être très mobile et présentant une capacité de pesée
élevée (700 kgs de grains) tout en étant d'un prix de
revient modéré.

La présente invention a enfin pour but de
créer une remorque à fonctions multiples permettant également de transporter des charges de matières agricoles lorsque cette remorque n'est pas mise en oeuvre pour la pesée du grain.

A cet effet, l'invention concerne une remorque à fonctions multiples destinée plus particulièrement aux travaux agricoles tels que le transport de charges, et la pesée de grains pour déterminer le rendement de production, cette remorque étant d'un type compact. susceptible d'être accrochée à un véhicule tracteur et comportant un châssis pourvu de roues et sur lequel est montée une benne de transport, remorque caractérisée en ce que la benne supporte un portique sur lequel est accrochée une trémie de réception du grain coopérant avec des organes de pesée du grain contenus dans la trémie, ces organes de pesée étant associés à un boîtier électronique comportant un dispositif d'affichage du poids du grain.

Ainsi, il est possible de peser une quantité importante de grains récoltée sur une surface donnée pour établir le rendement à la production. Grâce au dispositif électronique comportant un dispositif d'affichage. il est possible d'obtenir le poids du grain pesé en lecture directe.

Suivant une autre caractéristique de l'invention, la remorque comporte un dispositif de vidange du grain permettant de transférer la quantité de grains contenue dans la trémie de réception vers un véhicule agricole de transport.

Suivant une autre caractéristique de l'invention, le portiquecomporte deux montants métalliques verticaux se faisant face et fixés sur les bords de la benne par des profilés tels que des fers carrés, l'extrémité libre supérieure des montants étant pourvue des organes de pesée du grain.

Suivant une autre caractéristique de l'invention, les organes de pesée sont constitués de deux capteurs de force à jauge de contrainte associés au boîtier électronique et munis d'organes de fixation de la trémie en position de travail.

Suivant une autre caractéristique de l'invention, la trémie est constituée d'un cadre métallique dans sa partie supérieure, renforcé par une barre transversale munie de crochets coopérant avec les organes de fixation des capteurs de force, le corps de la trémie fixée sur le cadre étant constitué d'une bâche en matériau synthétique présentant une forme tronconique en position de travail, la partie inférieure de la trémie étant pourvue d'une trappe de vidange munie d'un anneau.

Suivant une autre caractéristique de l'invention, l'anneau de la trappe de vidange est fixé à la barre transversale de la partie supérieure de la trémie par un mousqueton à vis en position de transport de la trémie, c'est-à-dire en position verticale du cadre fixé aux montants du portique.

Suivant une autre caractéristique de l'invention, le dispositif d'affichage du boîtier électronique est à cristaux liquides, le boîtier étant alimenté par une batterie.

Suivant une autre caractéristique de l'invention, le dispositif de vidange du grain est constitué d'une vis sans fin, entraînée en rotation à l'intérieur d'une goulotte, l'une des extrémités de la goulotte étant pourvue d'un conquet de réception du grain, l'ensemble du dispositif du vidange étant susceptible d'être déplacé en translation d'une position horizontale de transport vers une position inclinée de travail, l'extrémité de la goulotte portant le conquet de réception coulissant sur des rails de guidage.

Enfin, suivant une autre caractéristique de l'invention, la vis sans fin est entraînée en rotation, soit par cardan à partir de l'arbre de sortie du véhicule tracteur, soit par courroie à partir d'un moteur électrique alimenté en continu par batterie.

La présente invention sera mieux comprise à l'aide d'un mode de réalisation de la remorque conforme à l'invention, représenté schématiquement, à titre d'exemple non limitatif, sur les dessins ci-joints dans lesquels :

- la figure 1 est une vue de côté de la remorque,

- la figure 2 est une vue en coupe partielle de l'avant de la remorque.

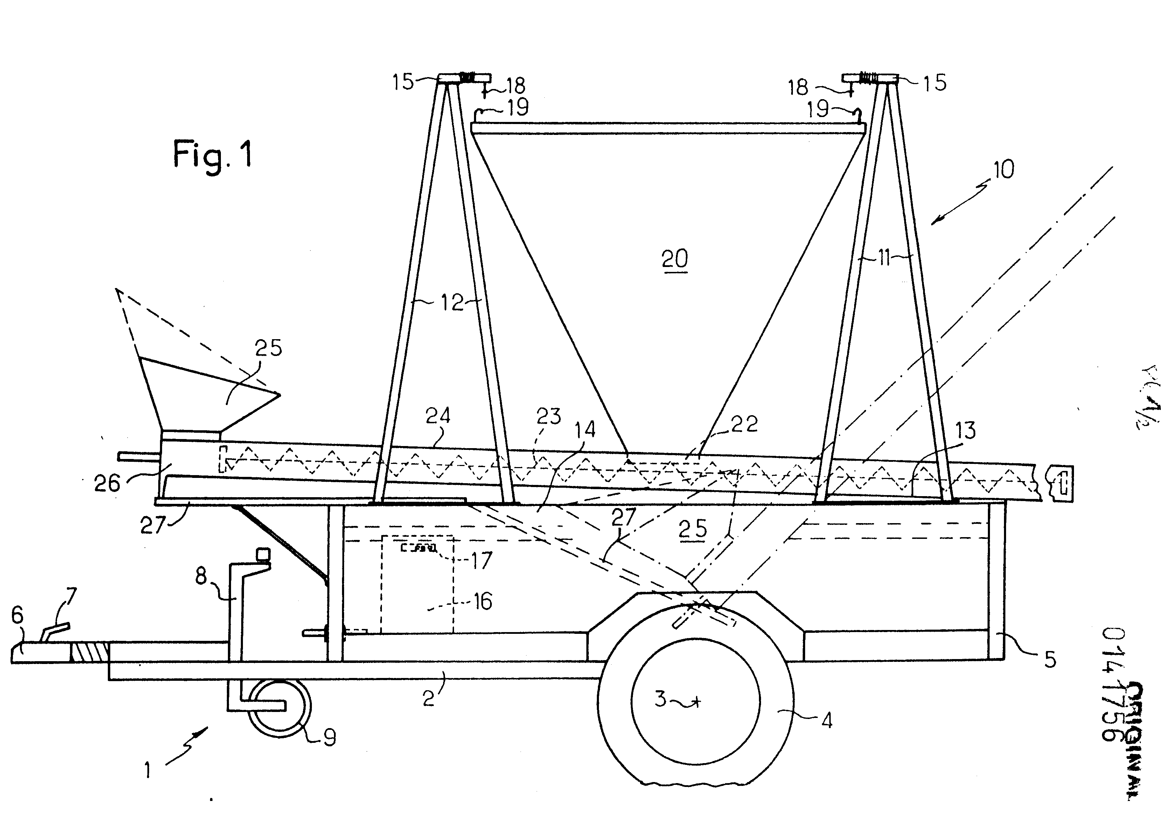

Selon la figure 1, la remorque 1, à fonctions multiples, est de construction compacte. Elle comporte notamment un châssis 2 pourvu d'un moyeu 3 portant les roues 4. Le châssis 2 porte également une benne de chargement 5. La partie avant du châssis 2 comporte un bras d'attelage 6 pourvu d'un crochet 7. Dans la partie avant du châssis 2 est également prévue une béquille 8 comprenant une roue joker 9.

La benne de transport 5 sert de support à un portique 10. Le portique 10 se compose de deux montants verticaux non représentés sur cette figure et se faisant face. Les montants métalliques verticaux sont fixés sur des profilés 11, 12 constitués par des fers carrés. Les profilés 11, 12 sont eux-mêmes fixés par l'intermédiaire d'un fer angulaire 13 sur les bords latéraux et supérieurs 14 de la benne de transport 5. L'extrémité libre supérieure des montants non représentés ou bien des profilés 11, 12 est munie des organes de pesée 15 du grain. Ces organes de pesée sont constitués de deux capteurs de force à jauge de contrainte associés au boîtier électronique 16 pourvu d'un dispositif d'affichage 17. Les capteurs de force à jauge de contrainte sont munis d'organes de fixation 18 coopérant avec les crochets 19 de la trémie 20. Les organes de fixation permettent l'accrochage de la trémie 20 dans sa position de travail.

La trémie 20 est constituée d'un cadre métallique 21 dans sa partie supérieure. Le cadre métallique 21 est renforcé par une barre transversale non représentée sur cette figure. Cette barre transversale est munie des crochets 19 coopérant avec les organes de fixation 1S des capteurs de force 15. Le corps de la trémie 20 est constitué d'une bâche en matériau synthétique présentant une forme générale tronconique en position de travail de la trémie. La partie inférieure de la trémie 20, c'est-à-dire l'extrémité la plus étroite du cône, est pourvue d'une trappe de vidange 22 munie d'un anneau.

L'anneau non représenté sur cette figure de la trappe de vidange 22 est fixé à la barre transversale du cadre 21 de la trémie 20 par un mousqueton à vis, en position de transport de la trémie. Dans cette position de transport, la trémie 20 est décrochée du portique 10 et le cadre est placé en position verticale dans la benne de transport 5, le cadre 21 étant fixé sur le portique 10 par l'intermédiaire de la barre transversale non représentée sur cette figure.

Les capteurs de force 15 détectent le poids du grain à l'intérieur de la trémie et envoient une information vers le boîtier électronique 16 où le poids du grain est affiché sur le dispositif d'affichage à cristaux 17, en lecture directe. Le boîtier électronique 16 est alimenté par une batterie indépendante placée sur la paroi extérieure de la benne 5, à l'intérieur du boîtier 16.

La remorque 1 comporte en outre un dispositif de vidange constitué d'une vis sans fin 23 montée à l'intérieur d'une goulotte cylindrique 24. La goulotte 24 est pourvue à l'une de ses extrémités d'un conquet de réception 25. L'ensemble du dispositif de vidange est susceptible d'être déplacé en translation d'une position horizontale représentée en trait plein, correspondant à une position de transport, vers une position inclinée de la goulotte, correspondant à la position de travail du dispositif de vidange, le conquet 25 venant sous la trémie 20. La position inclinée de la goulotte 24 représentée en tiretés correspond à la position de travail du dispositif de vidange, le grain provenant de la trémie 20 étant transféré par l'intermédiaire du conquet 25 et de la vis 23 vers un récipient de stockage ou de transport quelconque. Le mouvement de translation du dispositif de vidange, d'une position horizontale vers une position inclinée, s'effectue par coulissement de l'extrémité 26 de la goulotte 24 sur un rail de guidage 27 déterminant une rampe.

D'une manière générale, la vis sans fin 23 est entraînée en rotation soit par cardan à partir de l'arbre de sortie du véhicule tracteur, soit par courroie à partir d'un moteur électrique alimenté en continu par batterie et par exemple par la batterie du véhicule tracteur.

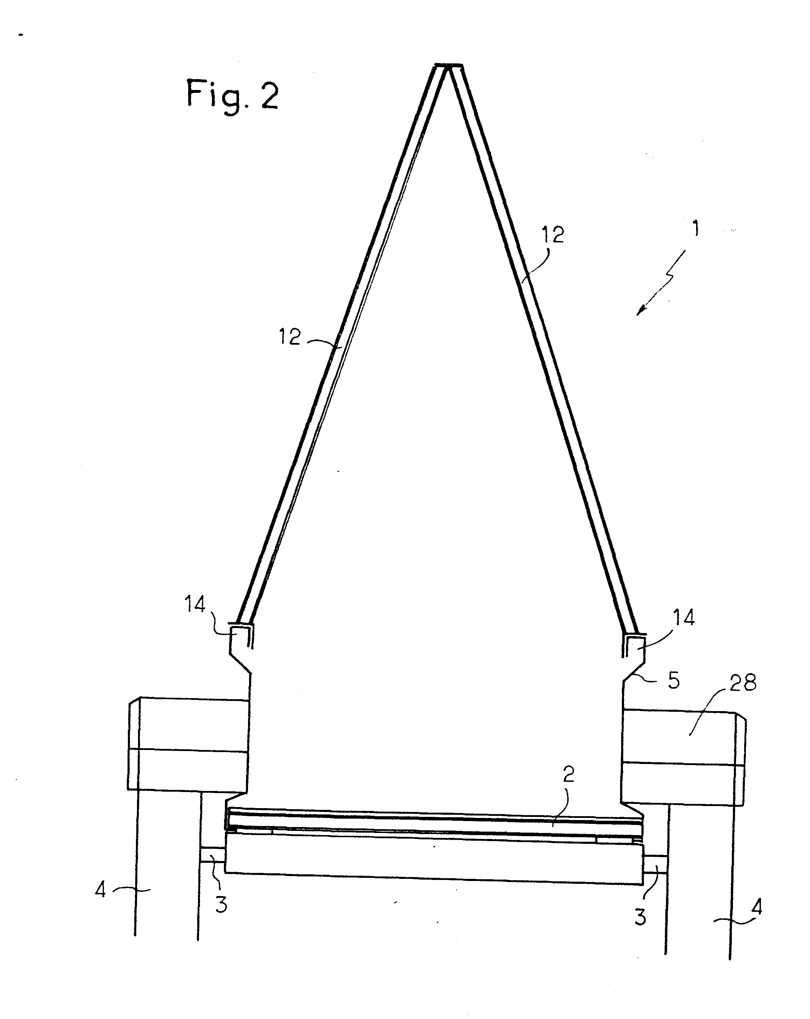

Selon la figure 2, la remorque 1, vue de l'avant, se compose d'une benne de transport 5 montée sur un châssis 2 portant lui-même l'essieu 3 sur lesquels sont fixées les roues 4. Ces dernières sont protégées par des garde-boue 25. Les bords latéraux et supérieurs 14 de la benne de transport 5 servent de supports au profilé 12 formant une partie du portique 10 décrit plus en détail ci-dessus.

Selon les figures 1 et 2, la remorque 1 est susceptible d'être attelée à une voiture de puissance moyenne par un crochet d'attelage classique.

Dans la position de repos de la remorque, c'est-à-dire en position repliée de la trémie 20 et dans la position horizontale de la goulotte 24, les capteurs 15 ne travaillent pas et l'ensemble de la remorque n'offre pas de prise au vent.

Dans la position horizontale de la goulotte, cette dernière n'entrave pas l'ouverture du hayon
par exemple d'une voiture tandis qu'à l'arrière de la
remorque la goulotte 24 n'excède pas un mètre, ce qui ne
rend pas obligatoire la présence d'une signalisation. Dans
cette position de repos, la remorque peut être attelée
et tracée sur route sans aucune difficulté. Il est à noter
que la remorque est équipée de feux d'éclairage et de
signalisation ainsi que d'un frein à inertie.

En position de pesée, la remorque repose
sur la béquille 5 pourvue de la roue joker 9. La trémie
20 est dépliée et le cadre supérieur 21 est accroché par
l'intermédiaire de la barre transversale au capteur de
force 15. La goulotte 24 et la vis sans fin 23 sont bloquées en position inclinée à 45°, le conquet de réception
25 venant en place sous la vanne de vidange 22 de la
trémie 20. L'autre extrémité libre de la goulotte 24 surmonte un récipient de stockage tel qu'une benne de transport agricole de manière que le grain contenu dans la
trémie 20 soit transféré dans ce récipient de stockage
ou de transport. L'engin agricole de récolte, tel qu'une
moissonneuse-batteuse, est rangé près de la remorque 1 et
remplit de grains la trémie de réception 20. Le système
de pesée est mis en marche et la coopération entre les
capteurs de force 15 et le boîtier électronique 16 permet
de déterminer le poids du grain dans la trémie correspondant à la récolte effectuée sur une surface déterminée.
La pesée se lit directement sur le dispositif d'affichage
17.

La remorque 1, en dehors des périodes de
récolte, peut être utilisée à des fins de transport. Pour
ce faire, on démonte le portique 10, la trémie 20 et le
dispositif de vidange.

8

## REVENDICATIONS

1°) Remorque à fonctions multiples, destinée plus particulièrement aux travaux agricoles tels que le transport de charges, et la pesée de grains pour déterminer le rendement de production, cette remorque étant d'un type compact, susceptible d'être accrochée à un véhicule tracteur et comportant un châssis pourvu de roues et sur lequel est montée une benne de transport, remorque caractérisée en ce que la benne de transport (5) supporte un portique (10) sur lequel est accrochée une trémie de réception (20) du grain coopérant avec des organes de pesée (15) du grain contenu dans la trémie (20), ces organes de pesée (15) étant associés à un boîtier électronique (16) comportant un dispositif d'affichage (17) du poids du grain, ce portique (10) comportant deux montants métalliques verticaux se faisant face et fixés sur les bords (14) de la benne (5) par des profilés (11, 12) tels que des fers carrés, l'extrémité libre supérieure des montants étant pourvue des organes de pesée (15) du grain.

2°) Remorque à fonctions multiples, conforme à la revendication 1, caractérisée en ce qu'elle comporte un dispositif de vidange du grain permettant de transférer la quantité de grains contenue dans la trémie de réception (20) vers un véhicule agricole de transport.

3°) Remorque à fonctions multiples, conforme à l'une quelconque des revendications 1 et 2 précédentes, caractérisée en ce que les organes de pesée (15) sont constitués de deux capteurs de force à jauge de contrainte associés au boîtier électronique (16) et munis d'organes de fixation (18) de la trémie (20) en position de travail.

4°) Remorque à fonctions multiples, conforme à l'une quelconque des revendications 1 à 3 précédentes, caractérisée en ce que la trémie (20) est consti-

tuée d'un cadre métallique (21) dans sa partie supérieure, renforcé par une barre transversale munie de crochets (19) coopérant avec les organes de fixation (18) des capteurs de force, le corps de la trémie (20), fixé sur le cadre (21), étant constitué d'une bâche en matériau synthétique présentant une forme tronconique en position de travail, la partie inférieure de la trémie étant pourvue d'une trappe de vidange (22) munie d'un anneau.

5°) Remorque à fonctions multiples, conforme à la revendication 4 précédente, caractérisée en ce que l'anneau de la trappe de vidange (22) est fixé à la barre transversale de la partie supérieure de la trémie (20) par un mousqueton à vis, en position de transport de la trémie (20), c'est-à-dire en position verticale du cadre (21) fixé aux montants du portique (10).

6°) Remorque à fonctions multiples, conforme à l'une quelconque des revendications 1 à 5 précédentes, caractérisée en ce que le dispositif d'affichage (17) du boîtier électronique (16) est à cristaux liquides, le boîtier (16) étant alimenté par une batterie.

7°) Remorque à fonctions multiples conforme à l'une quelconque des revendications 1 à 6 précédentes, caractérisée en ce que le dispositif de vidange du grain est constitué d'une vis sans fin (23), entraînée en rotation à l'intérieur d'une goulotte (24), l'une des extrémités (26) de la goulotte (24) étant pourvue d'un conquet de réception (25) du grain, l'ensemble du dispositif de vidange étant susceptible d'être déplacé en translation d'une position horizontale de transport vers une position inclinée de travail, l'extrémité (26) de la goulotte (24) portant le conquet de réception (25) coulissant dans un rail de guidage (27).

8°) Remorque à fonctions multiples, conforme à l'une quelconque des revendications 1 à 7 précédentes, caractérisée en ce que la vis sans fin (23) est

entraînée en rotation, soit par cardan à partir de l'arbre de sortie du véhicule tracteur, soit par courroie à partir d'un moteur électrique alimenté en continu par batterie.

ORIGINAL

Cabinet
BERT de KERAVENANT & HERRBURGER

Fig. 1

Fig. 2